# EUROPÄISCHE PATENTSCHRIFT

(11) **EP 1 088 645 B1**
(45) Veröffentlichungstag und Bekanntmachung des Hinweises auf die Patenterteilung: **10.11.2004**
(21) Anmeldenummer: 00121089.7
(22) Anmeldetag: 28.09.2000
(51) Int. Cl.: B29C 53/64, B65H 75/50

(54) **Verfahren und Vorrichtung zur Herstellung einer Wickelhülse zur Aufnahme von bahnförmigem Gut sowie Wickelhülse**
Method and apparatus for manufacturing a core for winding a web material, and winding core produced thereby
Procédé et dispositif pour fabriquer une bobine pour enrouler un matériau en bande et bobine ainsi fabriquée

(30) Priorität: 01.10.1999 DE 19947159; 01.10.1999 DE 29917234 U
(43) Veröffentlichungstag der Anmeldung: 04.04.2001
(73) Patentinhaber: Ing. Klaus Burk GmbH, 51491 Overath-Vilkerath (DE)
(72) Erfinder: Burk, Klaus, 51491 Overath (DE); Schmidt, Günter, 51766 Engelskirchen (DE); Quick, Dieter, 51789 Lindlar (DE)
(74) Vertreter: Bauer, Dirk, Dipl.-Ing. Dipl.-Kfm.

(56) Entgegenhaltungen:
- DE-A- 19 810 119
- US-A- 4 010 054

## Beschreibung

Die Erfindung betrifft ein Verfahren nach dem Oberbegriff des Anspruches 1 zur Herstellung einer aus einem Kunststoffmaterial mit einem Anteil von Verstärkungsfasern bestehenden Wickelhülse zur Aufnahme von bahnförmigem Gut. Des weiteren betrifft die Erfindung eine Vorrichtung nach dem Oberbegriff des Anspruches 13, zur Herstellung einer derartigen Wickelhülse. Außerdem betrifft die Erfindung eine Wickelhülse nach dem Oberbegriff des Anspruches 21 zur Aufnahme von bahnförmigem Gut.

Derartige, in der Regel zylindrische Wickelhülsen mit einer konzentrischen, axial verlaufenden Aufnahmeöffnung werden beispielsweise dazu verwendet, um Kunststoffolien darauf aufzuwickeln. Ein bekanntes Verfahren der eingangs beschriebenen Art besteht darin, die Wickelhülse auf spritzgußtechnischem Wege herzustellen. Hierdurch lassen sich auf kostengünstige Weise große Stückzahlen derartiger Hülsen herstellen. Durch den Zusatz der Verstärkungsfasern, bei denen es sich beispielsweise um Glas-, Kohlenstoff- oder andere Fasern handeln kann, besteht die Möglichkeit, die Festigkeitseigenschaften, insbesondere den Elastizitätsmodul, der die Fasern umgebenden Kunststoffmatrix wesentlich zu verbessern.

Ein Nachteil des bekannten Herstellungsverfahrens besteht darin, daß sich die Fasern beim Einspritzvorgang in das Formwerkzeug in Füll- bzw. Fließrichtung des Kunststoffs orientieren, so daß sich die Festigkeiten bei einer axialen und einer radialen Belastung ganz erheblich voneinander unterscheiden. Prozeß- und strömungstechnisch bedingt, richten sich die Fasern beim Einspritzvorgang nämlich in Fließrichtung des Materials, d.h. in axiale Richtung der Hülse, aus, so daß sich in axiale Richtung zwar sehr deutliche, in radiale Richtung jedoch nur unwesentliche Festigkeitsvorteile ergeben.

Insbesondere bei hochwertigen Ultradünnst-Folien werden jedoch hohe Anforderungen an die Wickelhülsen gestellt. Diese Anforderungen betreffen zum einen die Hülsengeometrie, d.h. z.B. die Maßhaltigkeit (insbesondere im Hinblick auf den Außendurchmesser), die Rundheit sowie die Oberflächengüte der äußeren Mantelfläche, zum anderen auch die radiale Festigkeit, die aufgrund der hohen Wickelspannung derartiger Folien sowie deren Nachschwindung erforderlich ist. Aufgrund der kaum eintretenden Festigkeitsverbesserung trotz des Zusatzes der Verstärkungsfasern besteht bei den Wickelhülsen, die nach bekannten Verfahren gefertigt werden, die Notwendigkeit, die Wandstärke vergleichsweise groß auszuführen, was zu einem erhöhten Materialverbrauch sowie einem vergleichsweise hohen Hülsengewicht führt.

Aus der DE 198 10 119 A1 ist des weiteren ein Verfahren zur Herstellung einer Wikkelhülse bekannt, die aus zwei Schichten zusammengesetzt ist. Zunächst wird eine erste innere Schicht aus einem faserverstärkten Kunststoff hergestellt, bei der die Endlosfasern im Wickelverfahren aufgebracht werden. In einem nächsten Schritt wird dieses erste Teil in eine Spritzgußmaschine eingelegt und mit einer äußeren Schicht, ebenfalls aus Kunststoff, umspritzt. Die innere Schicht dient dazu, auch in radiale Richtung optimierte Festigkeitseigenschaften zu erhalten. Aufgrund der aufgespritzten Deckschicht läßt sich auf einfache Weise eine Oberfläche für das Wickelgut erhalten, die die speziell gewünschten Eigenschaften besitzt. Eine homogene Verbindung der äußeren mit der inneren Schicht erfolgt beim Umspritzen, indem die Oberfläche der inneren Schicht angeschmolzen wird.

Der Hauptnachteil dieses Verfahrens besteht darin, daß aufgrund der Zweistufigkeit des Herstellungsprozesses die Kosten erheblich sind.

Ein weiteres Herstellungsverfahren besteht darin, in Harzen getränkte Endlosglasfasern auf einem Formkörper zu Hülsen zu wickeln. Die auf diese Weise entstehenden Hülsen besitzen eine hervorragende Festigkeit, sind jedoch bei der Herstellung zeitaufwendig und auch im übrigen sehr teuer. Ein weiterer Nachteil besteht darin, daß eine Recyclingfähigkeit nicht gegeben ist. Schließlich ist auch die Oberflächenqualität derartiger Hülsen unbefriedigend, so daß es aufwendiger Nachbearbeitungsschritte bedarf.

US-A-4,010,054 zeigt ferner ein Verfahren nach dem Oberbegriff des Anspruches 1. Der Erfindung liegt die Aufgabe zugrunde, ein Verfahren zur Herstellung einer Wikkelhülse vorzuschlagen, die sich durch eine hohe Festigkeit in radiale Richtung sowie geringe Produktionskosten auszeichnet. Außerdem soll eine Vorrichtung zur Herstellung einer derartigen Wickelhülse sowie eine Wickelhülse mit einer hohen Festigkeit in bezug auf eine radiale Druckbeanspruchung bereitgestellt werden.

Ausgehend von einem Verfahren der eingangs beschriebenen Art, wird diese Aufgabe erfindungsgemäß durch die Merkmale des Anspruches 1 gelöst.

Das Verfahren gemäß der Erfindung macht sich den Umstand zunutze, daß sich die im extrudierten Kunststoffmaterial enthaltenen Fasern in Fließrichtung des Bandes ausrichten und daher zu einer deutlichen Festigkeitssteigerung in radiale Richtung führen, wie sie für Wickelhülsen von ganz wesentlicher Bedeutung ist. So lassen sich die Festigkeitswerte in radiale Richtung gegenüber einer Hülse, die aus demselben Material auf spritzgußtechnischem Wege hergestellt wurde, um ca. das Vier-fache steigern. Zum einen ist der apparative Aufwand gegenüber dem Spritzgußverfahren deutlich geringer. Zum anderen können die Wandstärken aufgrund der deutlich gesteigerten Festigkeitseigenschaften erheblich reduziert werden, so daß sich eine erhebliche Materialeinsparung ergibt. Daher sind die Kosten für Wickelhülsen, die nach dem erfindungsgemäßen Verfahren hergestellt werden, wesentlich niedriger als die bei der spritzgußtechnischen Herstellung.

Falls ein thermoplastisches Kunststoffmaterial verwendet wird, ist eine volle Recyclingfähigkeit der Hülse gegeben.

Typischerweise ist der Wickelkern ein rotierbarer Dorn einer Vorrichtung zur Durchführung des Verfahrens.

Alternativ besteht aber auch die Möglichkeit, daß ein hülsenförmiger Wickelkern einen Bestandteil der Wickelhülse bildet. Diese Kernhülse" kann zum Beispiel auf dem Wege der Extrusion oder des Spritzgießens hergestellt werden.

Sofern zwei in radiale Richtung übereinander angeordnete Lagen nicht unmittelbar zeitlich nacheinander aufgebracht werden, ist es zur Erzielung einer möglichst homogenen Verbindung zwischen zwei benachbarten Lagen von Vorteil, die Außenseite einer Lage des Bandes und/oder den Wickelkern vor dem Aufbringen der nächsten Lage des Bandes auf eine Temperatur gleich oder oberhalb der Schmelztemperatur des Kunststoffs aufzuheizen.

Gemäß einer Ausgestaltung der Erfindung ist vorgesehen, daß der Wickelkern rotiert und relativ zu einer Düse in axiale Richtung bewegt wird. Außerdem ist es sinnvoll, die Bewegungsrichtung des Wickelkerns in axiale Richtung jeweils nach Vollendung einer Lage des Bandes umzukehren. Auf diese Weise kann eine Unterbrechung der Extrusion sowie eine reine Rückstellbewegung des Wickelkerns vermieden werden.

Die Erfindung weiter ausgestaltend, ist vorgesehen, daß die Außenseite einer Lage vor dem Aufbringen der nächsten Lage mittels elektromagnetischer Strahlung, vorzugsweise hochenergetischer Infrarotstrahlung, aufgeheizt wird.

Wenn der Dorn von innen auf eine Temperatur unterhalb der Schmelztemperatur des Kunststoffs beheizt wird, wird eine zu rasche Auskühlung des aufgebrachten Bandes verhindert und dennoch ein Ablaufen des Bandes von der Oberfläche des Dorns vermieden.

Eine Weiterbildung des erfindungsgemäßen Verfahrens besteht darin, daß der Dorn nach Beendigung des Herstellungsvorgangs abgekühlt wird. Hierdurch wird das Abziehen der Wickelhülse von dem Dorn erleichtert. Dies gilt umso mehr, je größer der Unterschied zwischen dem Wärmeausdehnungskoeffizienten des Materials des Dorns und des für die Wickelhülse verwendeten Kunststoffmaterials ist.

Vorzugsweise besitzt das extrudierte Band im Querschnitt die Form eines (flachen) Rechtecks.

Sofern durch gleichzeitige Extrusion mehrerer Bänder mehrere Lagen gleichzeitig gewickelt werden, kann auf den Vorgang einer erneuten Erhitzung der Oberfläche einer unteren Lage vor dem Aufbringen der nächstfolgenden Lage verzichtet und dennoch eine homogene Verbindung zwischen in radialer Richtung benachbarten Lagen erzielt werden.

Insbesondere bei einer Aufheizung einer unteren Lage vor dem Aufbringen der nächsten Lage mit Hilfe von Infrarotstrahlung ist es vorteilhaft, wenn das Kunststoffmaterial eine dunkle Farbe aufweist, da der Anteil der vom Kunststoffmaterial absorbierten Strahlung in diesem Fall besonders hoch ist, so daß sich eine große Temperaturerhöhung ergibt. Vorzugsweise besitzen die Wickelhülsen eine schwarze bzw. dunkelgraue Farbe.

Werden für die Aufheizung beispielsweise Quarzstrahler verwendet, so ist die Farbe des Materials für die Absorptionseigenschaften nicht mehr bedeutsam.

Schließlich wird in verfahrenstechnischer Hinsicht noch vorgesehen, daß in die letzte Lage parallel zu dem Band ein Zusatzband extrudiert wird, das eine andere Farbe als das Band besitzt. Auf diese Weise lassen sich je nach der für das Zusatzband verwendeten Farbe die ansonsten einheitlich, beispielsweise dunkelgrau gefärbten Hülsen je nach spezieller Ausführungsform voneinander unterscheiden.

Die Erfindung betrifft des weiteren eine Vorrichtung nach Anspruch 13 zur Herstellung einer Wickelhülse aus einem Verstärkungsfasern enthaltenden Kunststoff mit
- einem Extruder mit mindestens einer Düse zur Erzeugung eines plastischen Bandes aus dem Kunststoff,
- einem Dorn, auf dem das Band wendelförmig so aufwickelbar ist, daß eine wendelförmige Stoßlinie einer radial weiter innen liegenden Lage zu der wendelförmigen Stoßlinie einer radial weiter außen liegenden Lage versetzt angeordnet ist oder diese in einer Tangentialebene an die weiter innen liegende Lage unter einem Winkel schneidet.

Die erfindungsgemäße Vorrichtung eröffnet die Möglichkeit, auf einfache Weise Wikkelhülsen herzustellen, die sich durch eine hohe Festigkeit in radiale Richtung auszeichnen und bei Verwendung von thermoplastischem Material voll recyclingfähig sind.

Vorzugsweise ist der Außenmantel des Dorns direkt mit dem Band umschaltbar. Altemativ ist es aber auch möglich, daß mit dem Dorn ein darauf aufschiebbarer Wikkelkern rotierbar ist, auf den das Band aufwickelbar ist. Ein derartiger "Hülsenkern", der auf dem Wege der Extrusion oder des Spritzgießens herstellbar ist, wird somit Bestandteil der fertigen Hülse.

Bei einer bevorzugten Ausführungsform ist der um seine Längsachse rotierbare Dorn in dessen axiale Richtung relativ zu der oder den stillstehenden Düse(n) bewegbar.

Um die Auskühlgeschwindigkeit des aufgebrachten Bandes zu verringern und das Abziehen der ausgehärteten Hülse von dem Dorn zu erleichtern, wird vorgeschlagen, daß der aus Aluminium bestehende und mit Teflon beschichtete Dorn beheizbar und kühlbar ist.

Sofern in radialer Richtung benachbarte Lagen nicht in kurzem zeitlichen Abstand nacheinander aufgebracht werden, ist es zur Erzielung einer möglichst homogenen Verbindung empfehlenswert, die Außenseite einer Lage vor der Aufbringung des Bandes der nächsten Lage mittels einer Heizeinrichtung auf eine Temperatur gleich oder oberhalb der Schmelztemperatur des Kunststoffs aufzuheizen.

Vorzugsweise weist die Heizeinrichtung mehrere in Umfangsrichtung des Dorns verteilt angeordnete Strahler auf, die sich - in Drehrichtung des Dorns betrachtet - vor der Düse des Extruders befinden.

Um nicht auf den Einsatz handelsüblicher faserverstärkter Kunststoffgranulate angewiesen zu sein, wird vorgeschlagen, dem Extruder Endlosfasern zuzuführen, die aufspleißbar und mit einem Imprägniermittel beschichtbar und anschließend mit den thermoplastischen Kunststoffen zu einem extrudierbaren Werkstoff misch- und compoundierbar sind, worin die Endlosfasern in Bruchstücken vorliegen.

Um die in einer einheitlichen Farbe hergestellten Wickelhülsen optisch auf einfache Weise unterscheidbar zu machen, weist eine bevorzugte Ausführungsform der erfindungsgemäßen Vorrichtung einen Nebenextruder auf, mit dem ein Zusatzband mit einer von der Farbe des Bandes abweichenden Farbe parallel zur letzteren und ebenfalls wendelförmig zumindest in die letzte Lage des Bandes extrudierbar ist.

Die zugrundeliegende Aufgabe wird des weiteren auch durch eine Wickelhülse nach Anspruch 21 zur Aufnahme von bahnförmigem Gut gelöst, die aus Kunststoffmaterial besteht, das Verstärkungsfasem in Form von Bruchstücken endlicher Länge enthält, wobei die Wickelhülse einen rohrförmigen Wickelkörper aufweist, der eine zentrische, in axiale Richtung verlaufende und sich von einer Stirnfläche bis zu der gegenüberliegenden Stirnfläche erstreckende Aufnahmeöffnung und eine das bahnförmige Gut abstützende äußere Mantelfläche aufweist und die dadurch gekennzeichnet ist, daß der Wickelkörper aus mehreren Lagen eines in jeder Lage wendelförmig aufgewickelten Bandes des Kunststoffmaterials besteht, wobei sowohl die Stirnflächen als auch die Mantelflächen des gewickelten Bandes miteinander homogen verschmolzen sind.

Durch den in Wendelform gewickelten bandförmigen Aufbau des Wickelkörpers der erfindungsgmäßen Hülse weist diese eine in bezug auf eine radiale Druckbeanspruchung hervorragende Festigkeit auf. Dies resultiert daraus, daß die in dem Kunststoff enthaltenen Fasern bei der Herstellung des Bandes sich in dessen Längsrichtung orientieren und aufgrund der wendelförmigen Anordnung des Bandes ungefähr in Umfangsrichtung vorliegen. Eine derartige Ausrichtung der Fasern ist zur Erhöhung der radialen Festigkeit wesentlich wirkungsvoller als eine axiale Ausrichtung der Fasern, wie dies bei einer spritzgußtechnisch hergestellten Hülse nach dem Stand der Technik der Fall ist. Sofern ein thermoplastischer Kunststoff verwendet wird, ist eine volle Recyclingfähigkeit der Hülse gegeben.

Vorteilhafterweise wird das Kunststoffband extrudiert und anschließend unmittelbar auf einem axial verschiebbaren Dorn wendelförmig aufgewickelt. Eine Verschmelzung benachbarter Stirn- oder Mantelflächen des Bandes kann entweder durch einen hinreichend schnellen Wickelvorgang in einer ausreichend warmen Umgebung (zur Vermeidung unnötiger Wärmeverluste) erfolgen oder dadurch, daß die miteinander zu verschmelzenden Kontaktflächen des Bandes vor deren Verbindung über die Schmelztemperatur des Kunststoffmaterials aufgeheizt werden. In jedem Fall ist es von Bedeutung, durch einen sorgfältigen Schmelzvorgang eine homogene Verbindung zwischen den Kontaktflächen des Bandes zu erhalten, um so die Festigkeitseigenschaften der ausgehärteten Wickelhülse sicherzustellen.

Gemäß einer Ausgestaltung der Erfindung wird vorgeschlagen, daß die Steigung der Wendeln des Bandes benachbarter Lagen jeweils entgegengesetzt ist.

Bei einer Extrusion des Kunststoffbandes aus einer Schlitzdüse lassen sich mehrere Lagen des Bandes in diesem Fall einfach dadurch erzeugen, daß die Bewegung des Wickeldorns jeweils umgekehrt wird, wobei die Extrusion des Bandes dabei unverändert fortgesetzt werden kann.

Bei einer gut zu recycelnden und den Festigkeitsanforderungen im vollen Umfang gerecht werdenden Hülse wird als thermoplastischer Kunststoff ABS und werden zur Verstärkung Fasern mit einer Länge von mindestens 0,2 mm und länger verwendet. Sinnvollerweise beträgt der Gewichtsanteil der Verstärkungsfasern mindestens 20%.

Die Erfindung weiter ausgestaltend, wird vorgeschlagen, daß das Band - bei einem typischen Durchmesser der Wickelhülse von 75 - 200 mm - eine Breite von 10 - 60 mm aufweist. Bei den vorgenannten Durchmessermaßen ergibt sich hierdurch eine Wendel mit einer vergleichweise geringen Steigung, so daß eine Ausrichtung der Fasern ungefähr im rechten Winkel zu der Längsachse der Wickelhülse vorliegt. Dies wirkt sich sehr positiv auf die Festigkeit gegenüber einer radialen Druckbeanspruchung aus.

Das erfindungsgemäße Verfahren wird nachfolgend anhand eines Ausführungsbeispiels einer Vorrichtung zur Herstellung einer Wickelhülse näher erläutert. Es zeigt:
- Fig. 1: eine Seitenansicht einer Vorrichtung zur Herstellung einer Wickelhülse;
- Fig. 2: eine Draufsicht auf die Vorrichtung gemäß Fig. 1 und
- Fig. 3: einen Längsschnitt durch eine nach dem erfindungsgemäßen Verfahren hergestellte Wickelhülse.

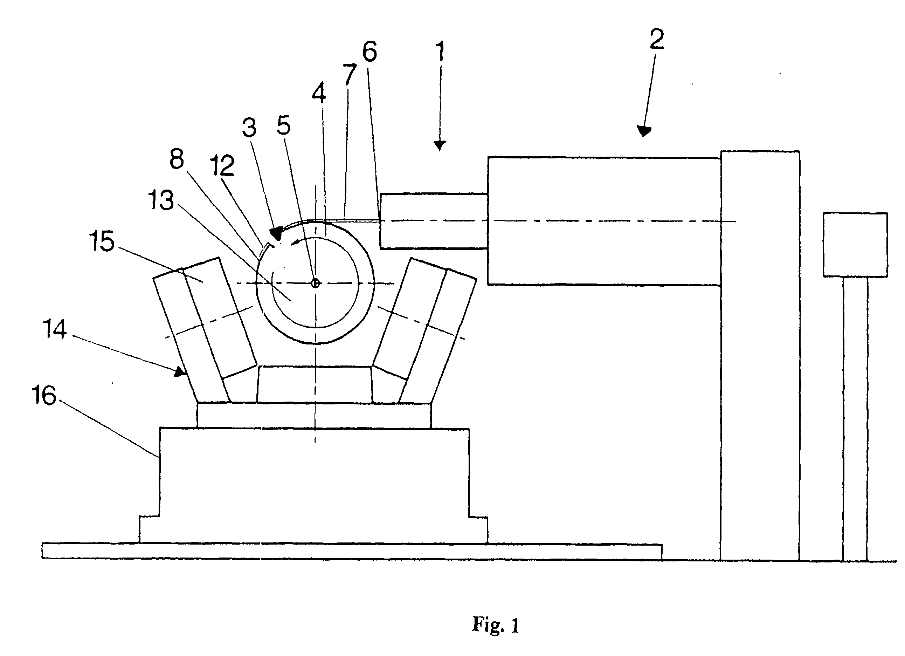

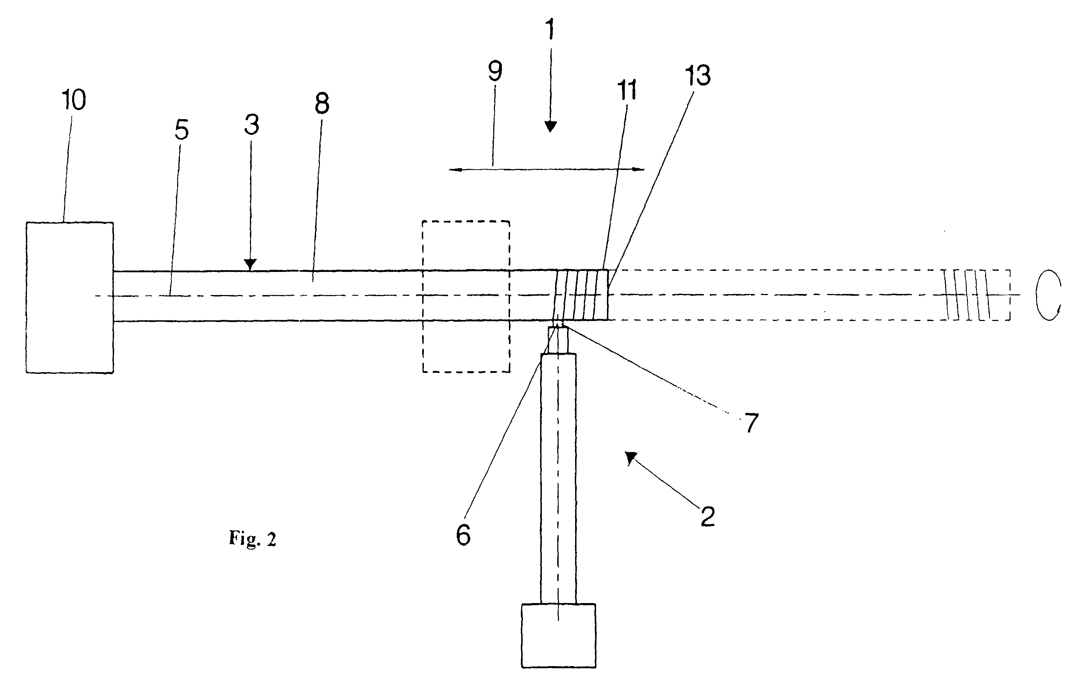

Eine in den Fig. 1 und 2 dargestellte Vorrichtung 1 zur Herstellung einer Wickelhülse aus einem thermoplastischen Kunststoff besteht aus einem Extruder 2 und einem Dorn 3, der in Richtung des Pfeils 4 um seine Längsachse 5 rotierbar ist. Der Extruder 2 weist eine Schlitzdüse 6 auf, aus der ein im Querschnitt rechteckförmiges Band 7 aus dem Kunststoffmaterial, welches Verstärkungsfasern mit einer mittleren Länge von ca. 0,2 mm enthält, extrudierbar ist. Die Bewegungsrichtung des Bandes 7 ist etwa rechtwinklig zu der Längsachse 5 des Dorns 3 sowie tangential zu dem zylindrischen äußeren Mantel 8 des Dorns 3.

Neben der Rotation um seine Längsachse 5 vollführt der Dorn 3 auch eine translatorische Bewegung in Richtung des Doppelpfeils 9, d.h. in richtung der Längsachse 5 des Dorns 3. Zu diesem Zweck befindet sich der Drehantrieb des Dorns 3 in einem Schlitten 10, der mit Hilfe einer nicht näher dargestellten Verfahreinrichtung verschiebbar ist.

Zu Beginn des Herstellungsvorgangs einer Wickelhülse befindet sich der Dorn 3 mit seiner Spitze 11 auf Höhe der Schlitzdüse 7, so daß das in Fig. 1 gezeigte Ende 12 des Bandes 7 an die Stirnseite 13 angrenzend auf die Mantelfläche 8 des Dorns 3 aufbringbar ist. Die Umfangsgeschwindigkeit des Dorns 3 entspricht der Austrittsgeschwindigkeit des Bandes 7 aus der Schlitzdüse 6, so daß das extrudierte Band 7 vor dem Auflegen auf die Mantelfläche 8 des Dorns 3 weder gestaucht noch gestreckt wird.

Da der Dorn 3 gleichzeitig eine rotatorische und eine translatorische Bewegung ausführt, wird das kontinuierlich aus der Schlitzdüse 6 austretende Band 7 wendelförmig auf der äußeren Mantelfläche 8 des Dorns 3 aufgewickelt, wobei die Stirnseiten des Bandes 7 unmittelbar aneinander angrenzen und aufgrund ihres Kontaktes im schmelzflüssigen Zustand des Bandes 7 eine in Axialrichtung des Dorns 3 homogene Verbindung bilden, welche durch eine nicht abgebildete Glätt- und Andrückrolle noch unterstützt wird.

Wenn der Dorn 3 die in Fig. 2 gestrichelt dargestellte Endposition erreicht hat, wird die axiale Bewegungsrichtung unter Beibehaltung der Rotation sowie des Bandvorschubs umgekehrt, so daß auf die vollendete erste Lage des Bandes 7 eine weitere Lage aufgebracht wird.

Um eine homogene Verbindung auch zwischen den in radialer Richtung benachbarten Lagen zu erhalten, ist die Vorrichtung 1 im Bereich des Extruders 2 mit einer Heizeinrichtung 14 in Form von drei Infrarotstrahlern 15 ausgestattet. Diese bestrahlen - in Umfangsrichtung betrachtet - etwa einen Bereich von ca. 200° mit hochenergetischer Infrarotstrahlung, um ein erneutes Anschmelzen der ersten Lage in dem Bereich zu erzielen, in dem anschließend die zweite Lage des Bandes 7 aufgewickelt wird. Die Infrarotstrahler 15 sind daher mit einem Gestell 16 verbunden und erhitzen das Kunststoffmaterial im Bereich vor dem Auflegen des Bandes 7. Aus Gründen der Übersichtlichkeit ist die Heizeinrichtung 14 in Fig. 2 nicht dargestellt.

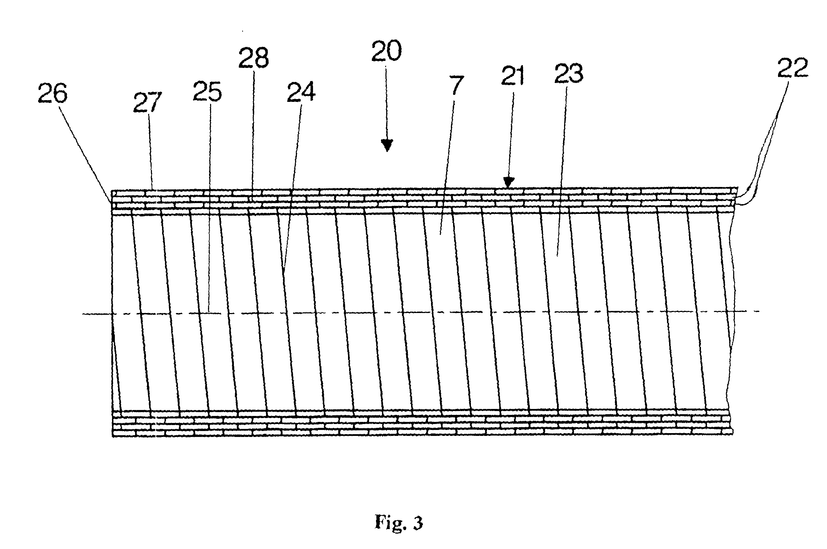

In Fig. 3 ist im Längsschnitt eine Wickelhülse 20 dargestellt, wie sie mit Hilfe der in den Fig. 1 und 2 dargestellten Vorrichtung hergestellt wurde. Der rohrförmige Hülsenkörper 21 besteht aus vier radial übereinander angeordneten, parallel zueinander verlaufenden Lagen 22, die jeweils aus stirnseitig aneinanderstoßenden Wicklungen des Bandes 7 bestehen.

Die innere Mantelfläche 23 der Wickelhülse 20 weist eine wendelförmig verlaufende, durchgängige Stoßlinie 24 auf. Da die Bewegungsrichtung des Dorns 3 am Ende der Wickelhülse umgekehrt wird, weisen die Stoßlinien 24 radial benachbarter Lagen 22 eine entgegengesetzte Neigung in bezug auf die Längsachse 25 der Wickelhülse 20 auf, wobei der Betrag des Neigungswinkels identisch ist. Durch diese entgegengesetzte Wendelrichtung benachbarter Lagen 22 wird ein inniger Verbund zwischen sämtlichen Lagen 22 zusätzlich zu der Verschmelzung des Materials benachbarter Lagen erreicht.

Aufgrund des Umkehrvorgangs an der Spitze 11 des Dorns 3 sowie dessen in axialer Richtung gegenüberliegenden Fußes entstehen bei unverändert fortgesetzter Extrusion in den Umkehrbereichen Unregelmäßigkeiten in der Bandanordnung.

Nach Beendigung des Wickelvorgangs und Auskühlung des Kunststoffmaterials sowie Abziehen des Hülsenrohlings von dem zuvor abgekühlten Dorn 3 werden die unregelmäßigen Endbereiche des Hülsenrohlings entfernt und die Hülse 20 somit auf eine definierte Länge gebracht. Die dabei ausgebildeten Stirnseiten 26 sind exakt plan und verlaufen im rechten Winkel zu der Längsachse 25. Die äußere Mantelfläche 27 der Wickelhülse 20 weist eine hohe Oberflächengüte sowie Maßhaltigkeit auf, was durch eine mechanische, vorzugsweise schleifende Nachbehandlung des zuvor abgelängten Hülsenrohlings erzielt wird.

Bei einer gebrauchsfertigen Wickelhülse 20 ist die wendelförmige Stoßlinie 24 auf der inneren Mantelfläche 25 zu erkennen, während auf der endbearbeiteten äußeren Mantelfläche 27 diese Stoßlinie 24 nicht mehr sichtbar ist, sondern der Mantel trotz seines bandförmigen Aufbaus eine homogene Materialstruktur sowie ein homogenes Erscheinungsbild aufweist. Auch die Grenzschichten 28 zwischen benachbarten Lagen 22 sind im Längsschnitt einer Wickelhülse 20 in Wirklichkeit nicht erkennbar und in Fig. 3 lediglich aus Gründen der Anschaulichkeit sehr markant hervorgehoben.

## Patentansprüche

1. Verfahren zur Herstellung einer aus einem Kunststoffmaterial mit einem Anteil von Verstärkungsfasern bestehenden Wickelhülse zur Aufnahme von bahnförmigem Gut, wobei
- der Kunststoff zu einem Band extrudiert wird;
- das Band wendelförmig um einen Wickelkem aufgewickelt wird und
- zeitlich nacheinander mehrere Lagen des Bandes radial übereinandergewickelt werden,
**dadurch gekennzeichnet, daß** die Außenseite einer Lage des Bandes und/oder des Wickelkems vor dem Aufbringen der nächsten Lage des Bandes auf eine Temperatur gleich oder oberhalb der Schmelztemperatur des Kunststoffs aufgeheizt wird.

2. Verfahren nach Anspruch 1, **dadurch gekennzeichnet, daß** der Wickelkern ein Dorn ist.

3. Verfahren nach Anspruch 1 oder 2, **dadurch gekennzeichnet, daß** der hülsenförmige Wickelkern einen Bestandteil der Wickelhülse bildet.

4. Verfahren nach einem der Ansprüche 1 bis 3, **dadurch gekennzeichnet, daß** der Wickelkern rotiert und relativ zu einer Düse in axiale Richtung bewegt wird.

5. Verfahren nach einem der Ansprüche 1 bis 4, **dadurch gekennzeichnet**, die Bewegungsrichtung des Wickelkerns in axiale Richtung jeweils nach Vollendung einer Lage des Bandes umgekehrt wird.

6. Verfahren nach einem der Ansprüche 1 bis 5, **dadurch gekennzeichnet, daß** die Außenseite einer Lage des Bandes und/oder des Wickelkems vor dem Aufbringen der nächsten Lage mittels elektromagnetischer Strahlung aufgeheizt wird.

7. Verfahren nach einem der Ansprüche 1 bis 6, **dadurch gekennzeichnet, daß** der Dorn von innen auf eine Temperatur unterhalb der Schmelztemperatur des Kunststoffs beheizt wird.

8. Verfahren nach einem der Ansprüche 1 bis 7, **dadurch gekennzeichnet, daß** der Dorn nach Beendigung des Herstellvorgangs abgekühlt wird.

9. Verfahren nach einem der Ansprüche 1 bis 8, **dadurch gekennzeichnet, daß** das Band im Querschnitt rechteckförmig ist.

10. Verfahren nach einem der Ansprüche 1 bis 9, **dadurch gekennzeichnet, daß** durch gleichzeitige Extrusion mehrerer Bänder mehrere Lagen gleichzeitig gewickelt werden.

11. Verfahren nach einem der Ansprüche 1 bis 10, **dadurch gekennzeichnet, daß** das Kunststoffmaterial eine dunkle Farbe aufweist.

12. Verfahren nach einem der Ansprüche 1 bis 11, **dadurch gekennzeichnet, daß** in die letzte Lage parallel zu dem Band ein Zusatzband extrudiert wird, das eine andere Farbe als das Band besitzt.

13. Vorrichtung (1) zur Herstellung einer Wickelhülse (25) aus einem Verstärkungsfasem enthaltenden Kunststoffmaterial mit
- einem Extruder (2) mit mindestens einer Düse (6) zur Erzeugung eines plastischen Bandes (7) aus dem Kunststoff;
einem Dorn (3), um den das Band (7) wendelförmig so aufwickelbar ist, daß eine wendelförmige Stoßlinie (24) einer radial weiter innen liegenden Lage (22) zu der wendelförmigen Stoßlinie (24) einer radial weiter außen liegenden Lage (22) versetzt angeordnet ist oder diese in einer Tangentialebene an die weiter innen liegende Lage (22) unter einem Winkel schneidet,
**dadurch gekennzeichnet, daß** die Außenseite einer Lage (22) vor der Aufbringung des Bandes (7) der nächsten Lage (22) mittels einer Heizeinrichtung (14) auf eine Temperatur gleich oder oberhalb der Schmelztemperatur des Kunststoffs aufheizbar ist.

14. Vorrichtung nach Anspruch 13, **dadurch gekennzeichnet, daß** der Außenmantel des Dorns (3) mit dem Band (5) umschaltbar ist.

15. Vorrichtung nach Anspruch 13 oder 14, **dadurch gekennzeichnet, daß** mit dem Dorn ein darauf aufschiebbarer Wickelkern rotierbar ist, auf den das Band aufwickelbar ist.

16. Vorrichtung nach einem der Ansprüche 13 bis 15, **dadurch gekennzeichnet, daß** der um seine Längsachse (5) rotierbare Dorn (3) in dessen axiale Richtung relativ zu der oder den Düse(n) (6) bewegbar ist.

17. Vorrichtung nach einem der Ansprüche 13 bis 16, **dadurch gekennzeichnet, daß** der aus Aluminium bestehende und mit Teflon beschichtete Dorn (3) beheizbar und kühlbar ist.

18. Vorrichtung nach Anspruch 17, **dadurch gekennzeichnet, daß** die Heizeinrichtung (14) mehrere in Umfangsrichtung des Dorns (3) verteilt angeordnete Strahler (15) aufweist.

19. Vorrichtung nach einem der Ansprüche 13 bis 18, **dadurch gekennzeichnet, daß** dem Extruder (2) Endlosfasern zuführbar sind, die aufspleißbar und mit einem Imprägniermittel beschichtbar und anschließend mit dem thermoplastischen Kunststoff zu einem extrudierbaren Werkstoff mischbar sind, worin die Endlosfasern in Bruchstücken vorliegen.

20. Vorrichtung nach einem der Ansprüche 13 bis 19, **gekennzeichnet durch** einen Zusatzextruder, mit dem ein Zusatzband mit einer von der Farbe des Bandes abweichenden Farbe parallel zu letzterem und wendelförmig zumindest auf die letzte Lage des Bandes extrudierbar ist.

21. . Wickelhülse zur Aufnahme von bahnförmigem Gut, die aus Kunststoffmaterial besteht, das Verstärkungsfasem in Form von Bruchstücken endlicher Länge enthält, wobei die Wickelhülse einen rohrförmigen Wickelkörper aufweist, der eine zentrische, in axiale Richtung verlaufende und sich von einer Stirnfläche bis zu der gegenüberliegenden Stirnfläche erstreckende Aufnahmeöffnung und eine das bahnförmige Gut abstützende äußere Mantelfläche aufweist, wobei der Wickelkörper aus mehreren radial übereinander angeordneten Lagen (22) eines in jeder Lage (22) wendelförmig aufgewickelten Bandes (7) des Kunststoffmaterials besteht, wobei sowohl die Stirnflächen als auch die Mantelflächen des gewickelten Bandes (7) miteinander homogen verschmolzen sind, **dadurch gekennzeichnet, daß** auch die Außenseite einer bereits aufgewickelten Lage (22) vor der Aufbringung des Bandes (7) der nächsten Lage (22) auf eine Temperatur gleich oder oberhalb der Schmelztemperatur des Kunststoffs aufgeheizt worden ist.

22. Wickelhülse nach Anspruch 21, **dadurch gekennzeichnet, daß** die Steigung der Wendeln des Bandes (7) benachbarter Lagen (22) jeweils entgegengesetzt ist.

23. Wickelhülse nach Anspruch 21 oder 22, **dadurch gekennzeichnet, daß** die Verstärkungsfasem eine Länge von mindestens 0,2 mm aufweisen und das thermoplastische Kunststoffmaterial ABS ist.

24. Wickelhülse nach einem der Ansprüche 21 bis 23, **dadurch gekennzeichnet, daß** der Gewichtsanteil der Verstärkungsfasem mindestens 20 % beträgt.

25. Wickelhülse nach einem der Ansprüche 21 bis 24, **dadurch gekennzeichnet, daß** das Band (7) eine Breite von 10 - 60 mm aufweist.

## Claims

1. A method for producing a winding tube for receiving a web-like material, which tube consists of a plastic material with a portion of reinforcing fibers, with
- the plastic being extruded into a ribbon;
- the ribbon being wound up in a helical way about a winding core, and
- several layers of the ribbon being wound above one another in a radial manner in a successive way over time;
**characterized in that** the outside of one layer of the ribbon and/or the winding core is heated to a temperature equal to or above the melting temperature of the plastic material prior to the application of the next layer of the ribbon.

2. A method as claimed in claim 1, **characterized in that** the winding core is a mandrel.

3. A method as claimed in claim 1 or 2, **characterized in that** the tubular winding core forms a component of the winding tube.

4. A method as claimed in one of the claims 1 to 3, **characterized in that** the winding core is rotated and is moved relative to a nozzle in the axial direction.

5. A method as claimed in one of the claims 1 to 4, **characterized in that** the direction of movement of the winding core in the axial direction is always reversed after the completion of a layer of the ribbon.

6. A method as claimed in one of the claims 1 to 5, **characterized in that** the outside of a layer of the ribbon and/or the winding core is heated by means of electromagnetic radiation prior to the application of the next layer.

7. A method as claimed in one of the claims 1 to 6, **characterized in that** the mandrel is heated from the inside to a temperature below the melting temperature of the plastic material.

8. A method as claimed in one of the claims 1 to 7, **characterized in that** the mandrel is cooled after ending the production process.

9. A method as claimed in one of the claims 1 to 8, **characterized in that** the ribbon is rectangular in its cross section.

10. A method as claimed in one of the claims 1 to 9, **characterized in that** several layers are wound simultaneously through simultaneous extrusion of several ribbons.

11. A method as claimed in one of the claims 1 to 10, **characterized in that** the plastic material has a dark color.

12. A method as claimed in one of the claims 1 to 11, **characterized in that** an additional ribbon is extruded in the last layer parallel to the ribbon, which additional ribbon has another color than the ribbon.

13. An apparatus (1) for producing a winding tube (25) from a plastic material containing reinforcing fibers, comprising
- an extruder (2) with at least one die (6) for producing a plastic ribbon (7) made of the plastic material;
- a mandrel (3) about which the ribbon (7) can be wound up in a helical manner in such a way that a helical impact line (24) of a layer (22) disposed radially further inwardly relative to the helical impact line (24) of a layer (22) disposed radially further outwardly is arranged in an offset way or intersects the same in a tangential plane at the layer (22) disposed further inwardly under an angle;
**characterized in that** the outside of a layer (22) is heatable to a temperature equal to or above the melting temperature of the plastic material by means of a heating device (14) prior to the application of the ribbon (7) of the next layer.

14. An apparatus as claimed in claim 13, **characterized in that** the outside jacket of the mandrel (3) with the ribbon (5) is reversible.

15. An apparatus as claimed in claim 13 or 14, **characterized in that** a winding core can be rotated in combination with the mandrel, which winding core can be slid on the same and on which the ribbon can be wound up.

16. An apparatus as claimed in one of the claims 13 to 15, **characterized in that** the mandrel (3) which is rotatable about its longitudinal axis (5) can be moved in its axial direction relative to the die(s) (6).

17. An apparatus as claimed in one of the claims 13 to 16, **characterized in that** the mandrel (3) consisting of aluminum and coated with Teflon can be heated and cooled.

18. An apparatus as claimed in claim 17, **characterized in that** the heating device (14) comprises several radiators (15) which are arranged in a distributed manner in the circumferential direction of the mandrel (3).

19. An apparatus as claimed in one of the claims 13 to 18, **characterized in that** continuous fibers can be supplied to the extruder (2) which can be spliced up and can be coated with an impregnation agent and are miscible thereafter with the thermoplastic material into an extrudable material, in which the continuous fibers are present in fragments.

20. An apparatus as claimed in one of the claims 13 to 19, **characterized by** an additional extruder with which an additional ribbon can be extruded with a color which departs from the color of the ribbon and parallel and helical to the latter at least onto the last !ayer of the ribbon.

21. A winding tube for receiving a web-like material, which tube consists of plastic material comprising reinforcing fibers in the form of fragments of endless length, with the winding tube comprising a tubular winding body which comprises a contric receiving opening extending in the axial direction and from one face surface to the opposite face surface and comprises an outer jacket surface supporting the web-like material, with the winding body consisting of several layers (22) radially arranged above each other of a ribbon (7) of plastic material which is wound up in a helical fashion in every layer (22), with both the face surfaces as well as the jacket surfaces of the wound ribbon (7) being molten together homogeneously, **characterized in that** also the outside of an already wound-up layer (22) is heated up to a temperature equal to or above the melting temperature of the plastic material prior to the application of the ribbon (7) of the next layer (22).

22. A winding tube as claimed in claim 21, **characterized in that** the ascent of the helixes of the ribbon (7) of adjacent layers (22) is each opposite.

23. A winding tube as claimed in claim 21 or 22, **characterized in that** the reinforcing fibers have a length of at least 0.2 mm and the thermoplastic material is ABS.

24. A winding tube as claimed in one of the claims 21 to 23, **characterized in that** the weight portion of the reinforcing fibers is at least 20%.

25. A winding tube as claimed in one of the claims 21 to 24, **characterized in that** the ribbon (7) has a width of 10 to 60 mm.

## Revendications

1. Procédé pour la fabrication d'un manchon d'enroulement composé d'une matière plastique contenant une proportion de fibres de renfort et destiné à recevoir une matière en forme de lé, dans lequel :
- la matière plastique est extrudée en forme de bande ;
- la bande est enroulée en spirale autour d'un axe d'enroulement ; et
- plusieurs couches de la bande sont enroulées successivement les unes par-dessus les autres dans le sens radial,
**caractérisé en ce que** la face extérieure d'une couche de la bande et/ou de l'axe d'enroulement est chauffée avant l'application de la couche suivante de bande à une température égale ou supérieure à la température de fusion du plastique.

2. Procédé selon la revendication 1, **caractérisé en ce que** l'axe d'enroulement est un mandrin.

3. Procédé selon la revendication 1 ou 2, **caractérisé en ce que** l'axe d'enroulement en forme de manchon est une partie du manchon d'enroulement.

4. Procédé selon l'une quelconque des revendications 1 à 3, **caractérisé en ce que** l'axe d'enroulement tourne et se déplace dans le sens axial par rapport à une buse.

5. Procédé selon l'une quelconque des revendications 1 à 4, **caractérisé en ce que** le sens de déplacement de l'axe d'enroulement dans le sens axial est inversé à la fin de chaque couche de bande.

6. Procédé selon l'une quelconque des revendications 1 à 5, **caractérisé en ce qu'**une face extérieure d'une couche de la bande et/ou de l'axe d'enroulement est chauffée avant l'application de la couche suivante au moyen d'un rayonnement électromagnétique.

7. Procédé selon l'une quelconque des revendications 1 à 6, **caractérisé en ce que** le mandrin est chauffé par l'intérieur à une température inférieure à la température de fusion du plastique.

8. Procédé selon l'une quelconque des revendications 1 à 7, **caractérisé en ce que** le mandrin est refroidi à la fin de l'opération de fabrication.

9. Procédé selon l'une quelconque des revendications 1 à 8, **caractérisé en ce que** la bande est de section rectangulaire.

10. Procédé selon l'une quelconque des revendications 1 à 9, **caractérisé en ce que** plusieurs couches sont enroulées simultanément par extrusion simultanée de plusieurs bandes.

11. Procédé selon l'une quelconque des revendications 1 à 10, **caractérisé en ce que** la matière plastique a une couleur foncée.

12. Procédé selon l'une quelconque des revendications 1 à 11, **caractérisé en ce que** dans la dernière couche, une bande supplémentaire ayant une couleur différente de la bande est extrudée parallèlement à la bande.

13. Dispositif (1) pour la fabrication d'un manchon d'enroulement (25) composé d'une matière plastique contenant des fibres de renfort, avec :
- une extrudeuse (2) possédant au moins une buse (6) pour produire une bande plastique (7) à partir de la matière plastique ;
- un mandrin (3) autour duquel la bande (7) est enroulée en spirale de telle manière qu'une ligne de jointure en spirale (24) d'une couche (22) située vers l'intérieur dans le sens radial soit décalée par rapport à la ligne de jointure en spirale (24) d'une couche (22) située plus vers l'extérieur dans le sens radial ou coupe celle-ci dans un plan tangent à la couche (22) située vers l'intérieur selon un certain angle,
**caractérisé en ce que** la face extérieure d'une couche (22) peut être chauffée à une température égale ou supérieure à la température de fusion du plastique avant l'application de la bande (7) de la couche (22) suivante au moyen d'un dispositif de chauffage (14).

14. Dispositif selon la revendication 13, **caractérisé en ce que** l'enveloppe extérieure du mandrin (3) peut être inversée avec la bande (5).

15. Dispositif selon la revendication 13 ou 14, **caractérisé en ce que** l'axe d'enroulement pouvant être enfilé sur le mandrin et lequel la bande peut être enroulée peut être entraîné en rotation avec le mandrin.

16. Dispositif selon l'une quelconque des revendications 13 à 15, **caractérisé en ce que** le mandrin (3) pouvant tourner autour de son axe longitudinal (5) est mobile dans son sens axial par rapport à la buse ou aux buses (6).

17. Dispositif selon l'une quelconque des revendications 13 à 16, **caractérisé en ce que** le mandrin (3) composé d'aluminium et revêtu de Téflon peut être chauffé et refroidi.

18. Dispositif selon la revendication 17, **caractérisé en ce que** le dispositif de chauffage (14) présente plusieurs radiateurs répartis (15) dans le sens de la circonférence du mandrin (3).

19. Dispositif selon l'une quelconque des revendications 13 à 18, **caractérisé en ce que** des fibres sans fin peuvent être amenées à l'extrudeuse (2), détordues et revêtues d'un produit d'imprégnation, puis mélangées à la matière thermoplastique pour donner un matériau pouvant être extrudé, dans lequel les fibres sans fin se présentent sous forme de fragments.

20. Dispositif selon l'une quelconque des revendications 13 à 19, **caractérisé en ce qu'**il comporte une extrudeuse supplémentaire permettant d'extruder une bande supplémentaire ayant une couleur différente de la couleur de la bande, parallèlement à celui-ci et en spirale, au moins sur la dernière couche de bande.

21. Manchon d'enroulement pour la réception d'une matière en forme de lé, composé de matière plastique contenant des fibres de renfort sous forme de fragments de longueur finie, lequel manchon d'enroulement présente un corps d'enroulement tubulaire qui possède une ouverture de réception centrée courant dans le sens axial et s'étendant d'une face frontale à la face frontale opposée et une surface d'enveloppe extérieure supportant la matière en forme de lé, le corps d'enroulement se composant de plusieurs couches (22) superposées dans le sens axial d'une bande (7) de la matière plastique enroulée en spirale dans chaque couche (22), les faces frontales et les surfaces d'enveloppe de la bande (7) enroulée étant fondues ensemble de manière homogène, **caractérisé en ce que** la face extérieure d'une couché (22) déjà enroulée a été chauffée avant l'application de la bande (7) de la couche (22) suivante à une température égale ou supérieure au point de fusion du plastique.

22. Manchon d'enroulement selon la revendication 21, **caractérisé en ce que** l'inclinaison des tours de la bande (7) de couches (22) voisines est opposée.

23. Manchon d'enroulement selon la revendication 21 ou 22, **caractérisé en ce que** les fibres de renfort ont une longueur d'au moins 0,2 mm et la matière plastique thermoplastique est de l'ABS.

24. Manchon d'enroulement selon l'une quelconque des revendications 21 à 23, **caractérisé en ce que** la proportion du poids des fibres de renfort est au moins de 20 %.

25. Manchon d'enroulement selon l'une quelconque des revendications 21 à 24, **caractérisé en ce que** la bande (7) a une largeur de 10 à 60 mm.
